# EUROPEAN PATENT APPLICATION

(11) **EP 4 524 314 A1**
(43) Date of publication of application: **19.03.2025**
(21) Application number: 23835673.7
(22) Date of filing: 10.05.2023
(51) Int. Cl.: D06F 37/20, D06F 37/22, D06F 37/30, D06F 34/08, D06F 33/48, D06F 33/44, D06F 33/47, D06F 105/46

(54) **WASHING MACHINE AND CONTROL METHOD THEREFOR**

(30) Priority: 08.07.2022 KR 20220084674
(71) Applicant: Samsung Electronics Co., Ltd., Suwon-si, Gyeonggi-do 16677 (KR)
(72) Inventor: LEE, Sungmo, Suwon-si, Gyeonggi-do 16677 (KR); KIM, Seunghoon, Suwon-si, Gyeonggi-do 16677 (KR); PARK, Junhyun, Suwon-si, Gyeonggi-do 16677 (KR)
(74) Representative: Walaski, Jan Filip
(86) International application number: PCT/KR2023/006335
(87) International publication number: WO 2024/010204

(57) **Abstract**

A washing machine that may minimize noise of a motor while maintaining deceleration of the motor includes: a drum; a motor configured to rotate the drum; an inverter circuit configured to drive the motor; and a controller configured to control the inverter circuit based on a d-axis current command value and a q-axis current command value and control the inverter circuit to perform a soft brake for a preset time and control the inverter circuit to perform a short brake based on an elapse of the preset time for decelerating the motor.

## Description

### [Technical Field]

The disclosure relates to a washing machine and a method for controlling the same, and more particularly, the disclosure relates to a washing machine that reduces noise generated during motor deceleration and a method for controlling the same.

### [Background Art]

In general, a washing machine may include a tub and a drum rotatably installed in the tub, and may wash laundry by rotating the drum containing the laundry in the tub. The washing machine may perform a washing process of laundry, a rinsing process of the washed laundry, and a spin-drying process of the rinsed laundry.

In particular, in the spin-drying process, water absorbed in the laundry may be separated from the laundry by accelerating and decelerating the drum containing the laundry at high speed.

When decelerating the drum, a short brake method is used to rapidly decelerate the motor.

The short brake method refers to a method of consuming the energy generated in the motor by the motor resistance by opening all three upper switching elements among six switching elements and closing all three lower switching elements.

However, consuming the energy generated in the motor by the motor resistance causes a large current to flow in the motor, which may generate noise.

### [DISCLOSURE]

### [Technical Problem]

An aspect of the disclosure is to provide a washing machine that minimizes noise of a motor while maintaining deceleration of the motor, and a method for controlling the washing machine.

### [Technical Solution]

According to an aspect of the disclosure, a washing machine may include a drum, a motor configured to rotate the drum; an inverter circuit configured to drive the motor; and a controller configured to control the inverter circuit based on a d-axis current command value and a q-axis current command value and control the inverter circuit to perform a soft brake for a preset time and control the inverter circuit to perform a short brake based on an elapse of the preset time for decelerating the motor, wherein, while controlling the inverter circuit to perform the soft brake, the controller may be configured to: gradually change the d-axis current command value from a d-axis current value applied to the motor to a preset target d-axis current value, and gradually change the q-axis current command value from a preset value that is unrelated to a q-axis current value applied to the motor to a preset target q-axis current value.

In addition, the preset target d-axis current value may have a negative value, and the preset target q-axis current value may have a negative value or a positive value depending on a rotation direction of the motor.

In addition, the preset value may be 0.

In addition, while controlling the inverter circuit to perform the short brake, the controller may be configured to open upper switching elements included in the inverter circuit and close lower switching elements included in the inverter circuit.

In addition, a deceleration section of the motor may include a first deceleration section that decelerates a rotation speed of the motor from a first rotation speed to a second rotation speed during a spin-drying process, and a second deceleration section that decelerates the rotation speed of the motor from a third rotation speed greater than the first rotation speed to a fourth rotation speed less than the second rotation speed during the spin-drying process, and a first preset target d-axis current value and a first preset target q-axis current value corresponding to the first deceleration section may be equal to a second preset target d-axis current value and a second preset target q-axis current value corresponding to the second deceleration section.

In addition, while controlling the inverter circuit to perform the soft brake, the controller may be configured to determine a change rate of the d-axis current command value based on a difference between the d-axis current value applied to the motor and the preset target d-axis current value and the preset time, and change the d-axis current command value based on the change rate of the d-axis current command value.

In addition, the controller may be configured to determine a change rate of the q-axis current command value based on a difference between the preset value and the preset target q-axis current value and the preset time, and change the q-axis current command value based on the change rate of the q-axis current command value.

In addition, in a case where the inverter circuit is controlled to perform the soft brake, the controller may be configured to control the inverter circuit based on the d-axis current command value and the q-axis current command value, and in a case where the inverter circuit is controlled to perform the short brake, the controller may be configured to control a plurality of switching elements included in the inverter circuit regardless of the d-axis current command value and the q-axis current command value.

In addition, the controller may be configured to calculate a current command vector corresponding to the d-axis current command value and the q-axis current command value, and gradually change a slope of the current command vector in a case where the inverter circuit is controlled to perform the soft brake.

In addition, the controller may be configured to determine the current command vector to allow a magnitude of the slope of the current command vector to gradually increase from 0 based on a d-axis.

In accordance with another aspect of the disclosure, a method for controlling a washing machine may include: for decelerating a motor, performing a soft brake for a preset time; and performing a short brake based on an elapse of the preset time, wherein the performing of the soft brake may include: gradually changing a d-axis current command value from a d-axis current value applied to the motor to a preset target d-axis current value, and gradually changing a q-axis current command value from a preset value that is unrelated to a q-axis current value applied to the motor to a preset target q-axis current value.

In addition, the preset target d-axis current value may have a negative value, and the preset target q-axis current value may have a negative value or a positive value depending on a rotation direction of the motor.

In addition, the preset value may be 0.

In addition, the performing of the short brake may include opening upper switching elements included in an inverter circuit configured to drive the motor and closing lower switching elements included in the inverter circuit.

In addition, a deceleration section of the motor may include a first deceleration section that decelerates a rotation speed of the motor from a first rotation speed to a second rotation speed during a spin-drying process, and a second deceleration section that decelerates the rotation speed of the motor from a third rotation speed greater than the first rotation speed to a fourth rotation speed less than the second rotation speed during the spin-drying process, and a first preset target d-axis current value and a first preset target q-axis current value corresponding to the first deceleration section may be equal to a second preset target d-axis current value and a second preset target q-axis current value corresponding to the second deceleration section.

In addition, the performing of the soft brake may include determining a change rate of the d-axis current command value based on a difference between the d-axis current value applied to the motor and the preset target d-axis current value and the preset time, and changing the d-axis current command value based on the change rate of the d-axis current command value.

In addition, the performing of the soft brake may include determining a change rate of the q-axis current command value based on a difference between the preset value and the preset target q-axis current value and the preset time, and changing the q-axis current command value based on the change rate of the q-axis current command value.

In addition, the performing of the soft brake may include controlling an inverter circuit configured to drive the motor based on the d-axis current command value and the q-axis current command value, and the performing of the short brake may include controlling a plurality of switching elements included in the inverter circuit regardless of the d-axis current command value and the q-axis current command value.

In addition, the performing of the soft brake may include calculating a current command vector corresponding to the d-axis current command value and the q-axis current command value, and gradually changing a slope of the current command vector in a case where the inverter circuit is controlled to perform the soft brake.

In addition, the gradually changing of the slope of the current command vector may include determining the current command vector to allow a magnitude of the slope of the current command vector to gradually increase from 0 based on a d-axis.

### [Advantageous Effects]

According to an aspect of the disclosure, noise generated during motor deceleration may be reduced.

In addition, according to an aspect of the disclosure, a time required to decelerate a motor may be reduced.

In addition, according to an aspect of the disclosure, damage to an inverter circuit during motor deceleration may be prevented.

### [DESCRIPTION OF DRAWINGS]

FIG. 1 illustrates an exterior of a washing machine according to an embodiment of the disclosure;
FIG. 2 is a side cross-sectional view of a washing machine according to an embodiment of the disclosure;
FIG. 3 is a control block diagram of a washing machine according to an embodiment of the disclosure;
FIG. 4 illustrates an example of drive circuitry included in a washing machine according to an embodiment of the disclosure;
FIG. 5 illustrates an example of a controller included in a washing machine according to an embodiment of the disclosure;
FIG. 6 illustrates an example of an operation cycle of a washing machine according to an embodiment of the disclosure;
FIG. 7A illustrates a current profile of an existing washing machine according to a preset drum speed profile according to an embodiment of the disclosure;
FIG. 7B illustrates a magnitude of motor noise generated in a case where an existing washing machine control method is used according to an embodiment of the disclosure;
FIG. 8A illustrates an amount of change in a d-axis current and an amount of change in a q-axis current during deceleration of a motor rotating clockwise according to an embodiment of the disclosure;
FIG. 8B illustrates an amount of change in a d-axis current and an amount of change in a q-axis current during deceleration of a motor rotating counterclockwise according to an embodiment of the disclosure;
FIG. 9 is a flowchart of a method for controlling a washing machine according to an embodiment of the disclosure;
FIG. 10A illustrates a change in a d-axis current command value and a change in a q-axis current command value in a case where a soft brake is performed on a motor rotating clockwise by a washing machine according to an embodiment of the disclosure;
FIG. 10B illustrates a change in a d-axis current command value and a change in a q-axis current command value in a case where a soft brake is performed on a motor rotating counterclockwise by a washing machine according to an embodiment of the disclosure;
FIG. 11 illustrates a drum speed profile and a current profile of a washing machine according to an embodiment of the disclosure; and
FIG. 12 illustrates an example of a control signal for an inverter circuit of a washing machine according to an embodiment of the disclosure.

### [MODES OF THE INVENTION]

Embodiments described in the disclosure and configurations shown in the drawings are merely examples of the embodiments of the disclosure, and may be modified in various different ways at the time of filing of the application to replace the embodiments and drawings of the disclosure.

The terms used in the specification are merely used to describe embodiments, and are not intended to limit and/or restrict the disclosure.

For example, it is to be understood that the singular forms are intended to include the plural unless the context clearly dictates otherwise.

In addition, it is to be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

In addition, it is to be understood that the terms "first", "second", or the like, may be used only to distinguish one component from another, not intended to limit the corresponding component in other aspects.

In addition, the terms such as "~portion", "~device", "~block", "~member", "~module" and the like may refer to a unit for processing at least one function or act. For example, the terms may refer to at least one process processed by at least one hardware, such as a field-programmable gate array (FPGA)/application specific integrated circuit (ASIC), software stored in memory, or processors.

Hereinafter, embodiments of the disclosure are described in detail with reference to accompanying drawings. In describing of the drawings, similar reference numerals may be used for similar or related elements.

An operation principle and embodiments of the disclosure are described below with reference to accompanying drawings.

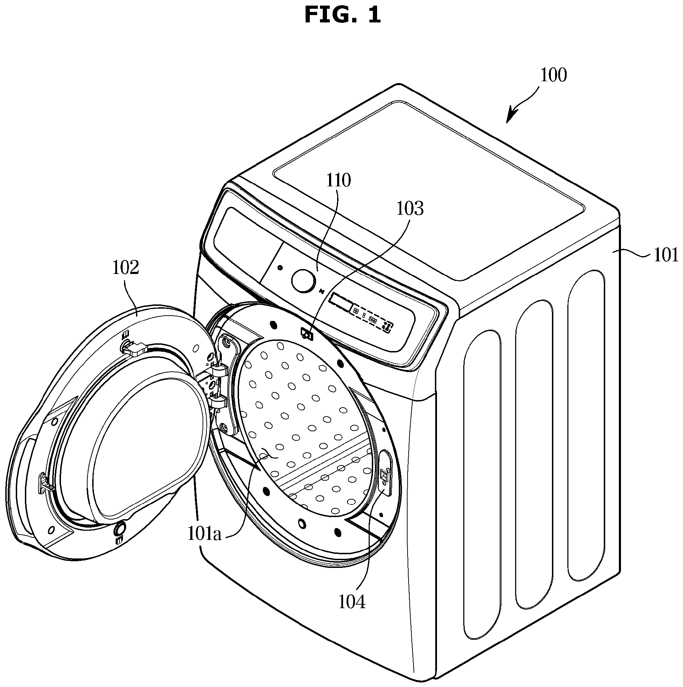

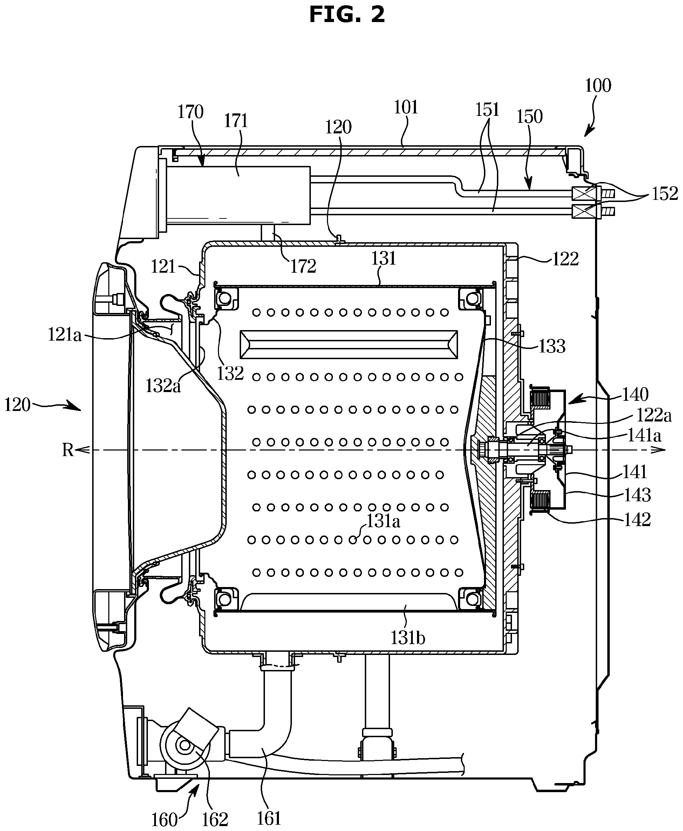

FIG. 1 illustrates an exterior of a washing machine according to an embodiment of the disclosure. FIG. 2 is a side cross-sectional view of a washing machine according to an embodiment of the disclosure.

A configuration of a washing machine 100 is described with reference to FIGS. 1 and 2.

The washing machine 100 according to an embodiment may be a drum-type washing machine that washes laundry by repeatedly lifting and lowering the laundry by rotating a drum 130, or may be an electric washing machine that washes laundry by using the water current generated by a pulsator when the drum 130 rotates.

That is, a method for controlling the washing machine 100 according to the disclosure may be applied to both the drum-type washing machine and the electric washing machine. However, in the embodiments described below, for convenience of description, an example in which the washing machine 100 according to an embodiment is a drum-type washing machine is described.

Referring to FIGS. 1 and 2, the washing machine 100 may include a cabinet 101. In addition, the washing machine 100 may further include a door 102, a control panel 110, a tub 120, the drum 130, a driver 140, a water supply 150, a drainage 160, and a detergent supply portion 170 accommodated in the cabinet 101.

An inlet 101a for inserting or taking out laundry may be disposed at the center of the front of the cabinet 101.

The door 102 may be arranged on the inlet 101a. The door 102 may be rotatably mounted on the cabinet 101 by a hinge.

The door 102 may open and close the inlet 101a, and the closing of the inlet 101a by the door 102 may be detected by a door switch 103. When the inlet 101a is closed and the washing machine 100 operates, the door 102 may be locked by a door lock 104.

The control panel 110 may be disposed on an upper front side of the cabinet 101. The control panel 110 may include an input interface for obtaining a user input for the washing machine 100 from a user, and a display for displaying operation information of the washing machine 100.

The tub 120 may be disposed in the cabinet 101 and may accommodate water for washing and/or rinsing.

The tub 120 may include tub front parts 121 in which an opening 121a is formed at the front, and tub rear parts 122 having a cylindrical shape with a closed rear.

The opening 121a may be provided at the front of the tub front parts 121 for inserting laundry into the drum 130 disposed inside the tub 120 or for taking laundry out of the drum 130. A bearing 122a for rotatably fixing a motor 141 may be provided at a rear wall of the tub rear parts 122.

The drum 130 may be rotatable in the tub 120 and may accommodate laundry.

The drum 130 may include a cylindrical drum body 131, drum front parts 132 in front of the drum body 131, and drum rear parts 133 in the rear of the drum body 131.

Through holes 131a connecting the inside of the drum 130 and the inside of the tub 120 and a lifter 131b for lifting the laundry to an upper part of the drum 130 while the drum 130 rotates may be provided on an inner surface of the drum body 131. The drum front parts 132 may be provided with an opening 132a for inserting the laundry into the drum 130 or taking the laundry out of the drum 130. The drum rear parts 133 may be connected to a shaft 141a of the motor 141 that rotates the drum 130.

The driver 140 may include the motor 141 that rotates the drum 130.

The motor 141 may be positioned outside the tub rear parts 122 of the tub 120 and may be connected to the drum rear parts 133 of the drum 130 through the shaft 141a. The shaft 141a may penetrate the tub rear parts 122 and may be rotatably supported by the bearing 122a disposed in the tub rear parts 122.

The motor 141 may include a stator 142 fixed to the outside of the tub rear parts 122, and a rotor 143 that is rotatable and connected to the shaft 141a. The rotor 143 may rotate by magnetic interaction with the stator 142, and the rotation of the rotor 143 may be transmitted to the drum 130 through the shaft 141a.

The motor 141 may include, for example, a brushless direct current (BLDC) motor or a permanent synchronous motor (PMSM) whose rotation speed is easy to control.

The water supply 150 may supply water to the tub 120.

The water supply 150 may include a water supply pipe 151 connected to an external water supply source to supply water to the tub 120, and a water supply valve 152 arranged on the water supply pipe 151.

The water supply pipe 151 may be arranged above the tub 120 and may extend from the external water supply source to a detergent container 171. Water may be guided to the tub 120 through the detergent container 171.

The water supply valve 152 may allow or block the supply of water from the external water supply source to the tub 120 in response to an electrical signal. The water supply valve 152 may include, for example, a solenoid valve that opens and closes in response to an electrical signal.

The drainage 160 may discharge water contained in the tub 120 and/or the drum 130 to the outside.

The drainage 160 may include a drain pipe 161 disposed below the tub 120 and extending from the tub 120 to the outside of the cabinet 101, and a drain pump 162 arranged on the drain pipe 161. The drain pump 162 may pump water in the drain pipe 161 to the outside of the cabinet 101.

The detergent supply portion 170 may supply detergent to the tub 120 and/or the drum 130.

The detergent supply portion 170 may include the detergent container 171 disposed above the tub 120 to store detergent, and a mixing pipe 172 connecting the detergent container 171 to the tub 120.

The detergent container 171 may be connected to the water supply pipe 151, and water supplied through the water supply pipe 151 may be mixed with detergent in the detergent container 171. The mixture of detergent and water may be supplied to the tub 120 through the mixing pipe 172.

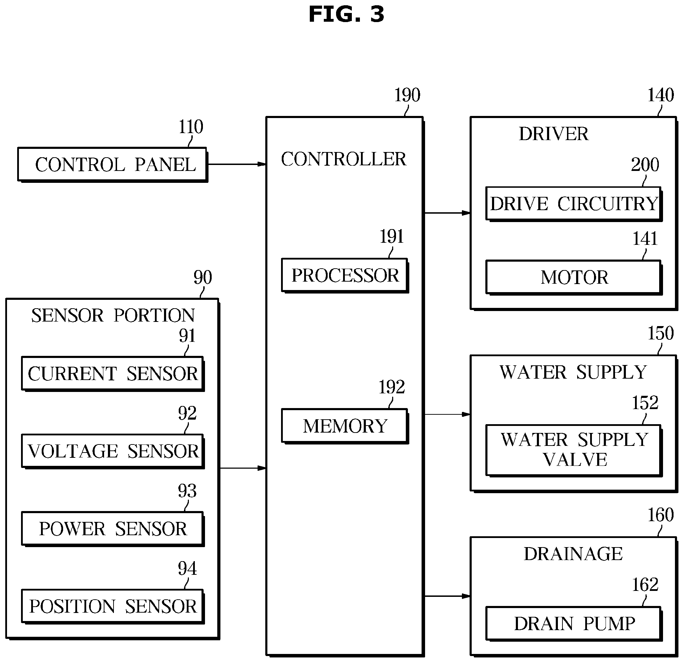

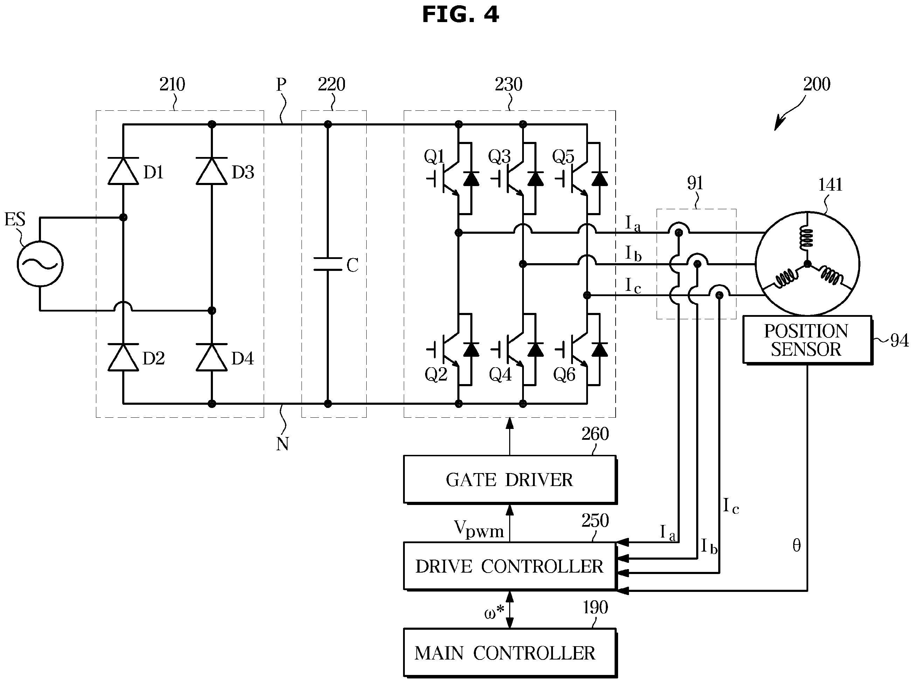

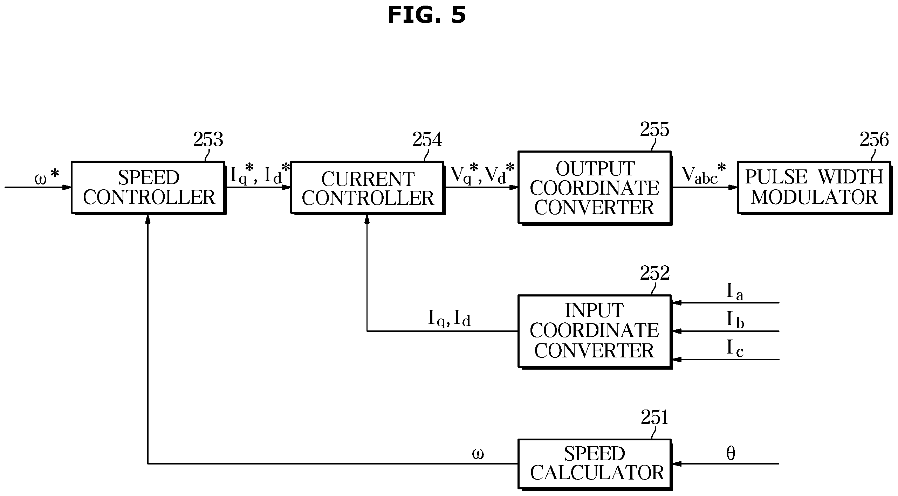

FIG. 3 is a control block diagram of a washing machine according to an embodiment of the disclosure. FIG. 4 illustrates an example of drive circuitry included in a washing machine according to an embodiment of the disclosure. FIG. 5 illustrates an example of a controller included in a washing machine according to an embodiment of the disclosure.

The washing machine 100 may further include the electrical/electronic configurations described below, in addition to the mechanical configurations described with reference to FIGS. 1 and 2.

Referring to FIGS. 3, 4, and 5, the washing machine 100 may include the control panel 110, a sensor portion 90, the driver 140, the water supply 150, the drainage 160, and a controller 190.

The control panel 110 may include an input button for obtaining a user input, and a display for displaying wash settings and/or washing operation information in response to the user input. In other words, the control panel 110 may provide an interface (hereinafter referred to as a 'user interface') for interaction between a user and the washing machine 100.

For example, the input button may include a power button, an operation button, a course selection dial, and a detail setting button. The input button may include, for example, a tact switch, a push switch, a slide switch, a toggle switch, a micro switch, or a touch switch.

The display may include a screen displaying a washing course selected by rotating the course selection dial and an operation time of the washing machine 1, and an indicator displaying detail settings selected by the setting button. The display may include, for example, a liquid crystal display (LCD) panel, a light emitting diode (LED) panel, or the like.

Here, washing courses of the washing machine 100 may include preset washing settings (e.g., washing temperature, number of rinses, spin speed) according to the type of laundry (e.g., bedclothes, underwear, etc.) and the material of laundry (e.g., wool, etc.). For example, a standard washing may include generalized settings for most laundry, and a bedclothes washing may include optimized settings for washing bedclothes. For example, the washing courses may be divided into a standard washing, intense washing, wool washing, bedclothes washing, baby clothes washing, towel washing, small load washing, boil washing, energy saving washing, outdoor clothes washing, rinsing/spin-drying, spin-drying, and the like.

The sensor portion 90 may include at least one of a plurality of sensors 91, 92, 93, and 94 that output various sensing values required for controlling a rotation speed of the motor 141.

For example, the sensor portion 90 may include at least one of the sensors 91, 92, and 93 outputting a sensing value that varies depending on a weight of the laundry, and may further include the sensor 94 outputting a sensing value that varies depending on a rotation angle of the motor 141.

The current sensor 91 may output a current value applied to the motor 141, and the number of current sensors is not limited. In addition, the current sensor 91 may be provided at any location where the current sensor may output a current value applied to the motor 141. For example, the current sensor 91 may be provided on all three-phase circuits to measure all three-phase currents, but may be provided on only two-phase circuits among the three-phase circuits according to embodiments, and may be provided in a drain terminal N of lower switching elements Q2, Q4, and Q6 of drive circuitry 200.

The voltage sensor 92 may output a voltage value applied to the motor 141, and number of voltage sensors 92 is not limited. In addition, the voltage sensor 92 may be provided at any location where the voltage sensor may output a voltage value applied to the motor 141.

The power sensor 93 may output a power value applied to the motor 141, and the number of power sensors 93 is not limited. In addition, the power sensor 93 may be provided at any location where the power sensor may output a power value applied to the motor 141.

The driver 140 may include the motor 141 configured to rotate according to a drive current supplied from the drive circuitry 200.

The drive circuitry 200 may supply a drive current for driving the motor 141 to the motor 141 in response to a drive signal from the controller 190.

As shown in FIG. 4, the drive circuitry 200 may include a rectifier circuit 210 rectifying alternating current (AC) power of an external power source (ES), a direct current (DC) link circuit 220 removing ripple of the rectified power and outputting DC power, an inverter circuit 230 converting the DC power to driving power in a sine wave form and outputting a drive current Iabc to the motor 141, a current sensor 91 measuring drive currents Ia, Ib, and Ic supplied to the motor 141, a drive controller 250 controlling driving power conversion of the inverter circuit 230, and a gate driver 260 turning on/off switching elements Q1, Q2, Q3, Q4, Q5, and Q6 included in the inverter circuit 230 based on the drive signal of the drive controller 250.

In addition, each of the motors 141 may be provided with the position sensor 94 measuring a position (e.g., an electrical angle of the rotor) of the rotor 143 of the motor 141.

The rectifier circuit 210 may include a diode bridge including a plurality of diodes D1, D2, D3, and D4. The diode bridge may be arranged between a positive terminal P and a negative terminal N of the drive circuitry 200. The rectifier circuit 210 may rectify AC power (AC voltage and AC current) whose magnitude and direction change over time into power having a defined direction.

The DC link circuit 220 includes a DC link capacitor C storing electric energy. The DC link capacitor C may be arranged between the positive terminal P and the negative terminal N of the drive circuitry 200. The DC link circuit 220 may receive power rectified by the rectifier circuit 210 and may output DC power having a defined magnitude and direction.

The inverter circuit 230 may include three pairs of switching elements (Q1 and Q2, Q3 and Q4, Q5 and Q6) arranged between the positive terminal P and the negative terminal N of the drive circuitry 200. Specifically, the inverter circuit 230 may include a plurality of upper switching elements Q1, Q3, and Q5 and a plurality of lower switching elements Q2, Q4, and Q6.

The pairs of switching elements (Q1 and Q2, Q3 and Q4, Q5 and Q6) may each include two switching elements (Q1 and Q2, Q3 and Q4, Q5 and Q6) that are connected in series. The switching elements Q1, Q2, Q3, Q4, Q5, and Q6 included in the inverter circuit 230 may each be turned on/off according to an output of the gate driver 260, and the three-phase drive current Iₐ, I_{b}, and I_{c} may be supplied to the motor 141 according to the turning on/off of the switching elements Q1, Q2, Q3, Q4, Q5, and Q6.

The current sensor 91 may measure the three-phase drive current (a-phase current, b-phase current, c-phase current) output from the inverter circuit 230, and may output data representing the measured three-phase drive current values (Iₐ, I_{b}, I_{c}: I_{abc}) to the drive controller 250. In addition, the current sensor 91 may measure only a two-phase drive current among the three-phase drive current I_{abc}, and the drive controller 250 may estimate another drive current from the two-phase drive current.

The position sensor 94 may be provided in the motor 141, and may measure a position θ (e.g., an electrical angle of the rotor) of the rotor 143 of the motor 141, and output position data representing the electrical angle θ of the rotor 143. The position sensor 94 may be implemented as a Hall sensor, an encoder, a resolver, and the like.

The gate driver 260 may output a gate signal to turn on/off the plurality of switching elements Q1, Q2, Q3, Q4, Q5, and Q6 included in the inverter circuit 230 based on the output of the drive controller 250.

The drive controller 250 may be provided separately from the controller 190. The drive controller 250 may include, for example, an application specific integrated circuit (ASIC) outputting a drive signal based on a rotation speed command ω*, the drive current value I_{abc}, and the position θ of the rotor. Alternatively, the drive controller 250 may include memory storing a series of instructions for outputting a drive signal based on the rotation speed command ω*, the drive current value I_{abc}, and the position θ of the rotor, and a processor processing a series of instructions stored in the memory.

The drive controller 250 may be provided integrally with the controller 190. For example, the drive controller 250 may be implemented as a series of instructions for outputting the drive signal based on the rotation speed command ω*, the drive current value I_{abc}, and the position θ of the rotor stored in the memory 192 of the controller 190.

The drive controller 250 may receive a motor control signal (e.g., a rotation speed command) from the controller 190, receive the drive current value I_{abc} from the current sensor 91, and receive the position θ of the rotor of the motor 141 from the position sensor 94. The drive controller 250 may determine a drive current value to be supplied to the motor 141 based on the rotation speed command ω*, the drive current value I_{abc}, and the position θ of the rotor, and may output a drive signal (pulse width modulation (PWM) signal) for controlling the inverter circuit 230 according to the determined drive current value.

As shown in FIG. 5, the drive controller 250 may include a speed calculator 251, an input coordinate converter 252, a speed controller 253, a current controller 254, an output coordinate converter 255, and a pulse width modulator 256.

The speed calculator 251 may calculate a rotation speed value ω of the motor 141 based on the rotor electrical angle θ of the motor 141. Here, the rotor electrical angle θ may be received from the position sensor 94 disposed in the motor 141. For example, the speed calculator 251 may calculate the rotation speed value ω of the motor 141 based on a change in the electrical angle θ of the rotor 143 with respect to a sampling time interval.

In a case where the position sensor 94 is not provided according to an embodiment, the speed calculator 251 may calculate the rotation speed value ω of the motor 141 based on the drive current value I_{abc} measured by the current sensor 91.

The input coordinate converter 252 may convert the three-phase drive current value I_{abc} into a d-axis current value I_{d} and a q-axis current value I_{q} based on the rotor electrical angle θ. In other words, the input coordinate converter 252 may perform axis conversion of the a-axis, b-axis, and c-axis of the three-phase drive current value I_{abc} to a d-axis and a q-axis. Here, the d-axis refers to an axis in a direction that matches a direction of a magnetic field generated by the rotor of the motor 141, and the q-axis refers to an axis in a direction that is 90 degrees ahead of the direction of the magnetic field generated by the rotor of the motor 141. Here, 90 degrees refers to an electrical angle, not a mechanical angle of the rotor, and the electrical angle refers to an angle converted to 360 degrees from the angle between adjacent N poles of the rotor or the angle between adjacent S poles.

In addition, the d-axis current value I_{d} may represent a current component that generates a magnetic field in the d-axis direction among the drive current, and the q-axis current value I_{q} may represent a current component that generates a magnetic field in the q-axis direction among the drive current.

The input coordinate converter 252 may calculate the q-axis current value I_{q} and the d-axis current value I_{d} from the three-phase drive current value I_{abc} using a known method.

Accordingly, the drive controller 250 may detect the q-axis current value I_{q} and the d-axis current value I_{d} currently applied to the motor.

The speed controller 253 may compare the rotation speed command ω* and the rotation speed value ω of the motor 141, and output a q-axis current command value I_{q*} and a d-axis current command value I_{d*} based on the comparison result. For example, the speed controller 253 may calculate the q-axis current command value I_{q*} and the d-axis current command value I_{d*} for controlling the motor 141 based on a difference between the rotation speed command ω* and the rotation speed value ω by using proportional integral control (PI control).

According to various embodiments, during deceleration of the motor 141, the speed controller 253 may calculate the q-axis current command value I_{q*} and the d-axis current command value I_{d*} regardless of the rotation speed command _{CD}*.

The current controller 254 may compare the q-axis current command value I_{q*} and the d-axis current command value I_{d*} output from the speed controller 253 with the q-axis current value I_{q} and the d-axis current value I_{d} output from the input coordinate converter 252, and may output a q-axis voltage command value V_{q*} and a d-axis voltage command value V_{d*} based on the comparison result. Specifically, by using proportional integral control (PI control), the current controller 254 may determine the q-axis voltage command value V_{q*} based on a difference between the q-axis current command value I_{q*} and the q-axis current value I_{q}, and may determine the d-axis voltage command value V_{d*} based on a difference between the d-axis current command value I_{d*} and the d-axis current value I_{d}.

The output coordinate converter 255 may convert a dq-axis voltage command value V_{dq*} into a three-phase voltage command V_{abc*} (a-phase voltage command, b-phase voltage command, c-phase voltage command) based on the rotor electrical angle θ of the motor 141.

The output coordinate converter 255 may convert the dq-axis voltage command value V_{dq*} into the three-phase voltage command V_{abc*} using a known method.

The pulse width modulator 256 may generate a PWM control signal V_{pwm} for turning on or off the switching elements Q1, Q2, Q3, Q4, Q5, and Q6 of the inverter circuit 230 from the three-phase voltage command V_{abc*}. Specifically, the pulse width modulator 256 may perform pulse width modulation (PWM) on the three-phase voltage command V_{abc*} and may output the pulse width modulated PWM signal V_{pwm} to the gate driver 260.

As such, the drive controller 250 may output the drive signal (PWM signal) to the gate driver 260, based on a dq-axis current value I_{dq} and a dq-axis current command value I_{dq}*.

As described above, the drive circuitry 200 may supply a drive current to the motor 141 according to the motor control signal of the controller 190.

The motor 141 may rotate or decelerate the drum 130 depending on the drive current from the drive circuitry 200.

The water supply valve 152 may be maintained in a normally closed state and may be opened in response to a water supply signal from the controller 190. By opening the water supply valve 152, water may be supplied to the tub 120 through the water supply pipe 151.

The drain pump 162 may pump water in the drain pipe 161 to the outside of the cabinet 101 in response to a drain signal from the controller 190. The water in the tub 120 may be discharged by pumping by the drain pump 162 to the outside of the cabinet 101 through the drain pipe 161.

For example, the controller 190 may be mounted on a printed circuit board disposed on the rear side of the control panel 110.

The controller 190 may be electrically connected to the control panel 110, the sensor portion 90, the driver 140, the water supply 150, and the drainage 160.

The controller 190 may include a processor 191 generating a control signal for controlling an operation of the washing machine 100, and memory 192 storing programs and data for generating a control signal for controlling an operation of the washing machine 100. The processor 191 and the memory 192 may be implemented as separate semiconductor devices or as a single semiconductor device. In addition, the controller 190 may include a plurality of processors 191 or a plurality of memories 192.

The processor 191 may process data and/or signals according to the programs provided from the memory 192, and may provide control signals to each component of the washing machine 100 based on the processing results.

The processor 191 may receive a user input from the control panel 110, and may process the user input.

The processor 191 may output a control signal for controlling the motor 141 (or the drive circuitry 200), the water supply valve 152, the drain pump 162, and the door lock in response to the user input. For example, the processor 191 may control the motor 141, the water supply valve 152, the drain pump 162, and the door lock to sequentially perform a washing process, a rinsing process, and a spin-drying process. In addition, the processor 191 may output a control signal for controlling the control panel 110 to display wash settings and washing operation information in response to the user input.

The processor 191 may output a motor control signal for rotating the motor 141 at high speed to the drive circuitry 200 during the spin-drying process of the washing machine 100. During the spin-drying process of the washing machine 100, the processor 191 may receive information about a drive current of the motor 141 (e.g., d-axis current value I_{d}, q-axis current value I_{q}) from various sensors 91, 92, 93, and 94 included in the drive circuitry 200, and may output the motor control signal for controlling a rotation speed of the motor 141 to the drive circuitry 200 based on the drive current of the motor 141.

For example, during the spin-drying process, the processor 191 may output, to the drive circuitry 200, a motor control signal to accelerate the motor 141 to a first rotation speed, then decelerate the motor 141 to a second rotation speed, then accelerate the motor 141 to a third rotation speed, and then decelerate the motor 141 to a fourth rotation speed.

The processor 191 may include arithmetic circuitry, memory circuitry, and control circuitry. The processor 191 may include a single chip or a plurality of chips. In addition, the processor 191 may include a single core or a plurality of cores.

The memory 192 may record/store programs for controlling a washing operation according to a washing course and data including wash settings according to a washing course. In addition, the memory 192 may record/store a currently selected washing course and wash settings based on a user input.

The memory 192 may include volatile memory, such as static random access memory (SRAM) or dynamic random access memory (DRAM), and a nonvolatile memory, such as read only memory (ROM) or erasable programmable read only memory (EPROM). The memory 192 may include a single memory device or may include a plurality of memory devices.

As described above, the washing machine 100 may accelerate or decelerate the motor 141 based on a change in the drive current (e.g., d-axis current command value, q-axis current command value) of the motor 141 during the spin-drying process.

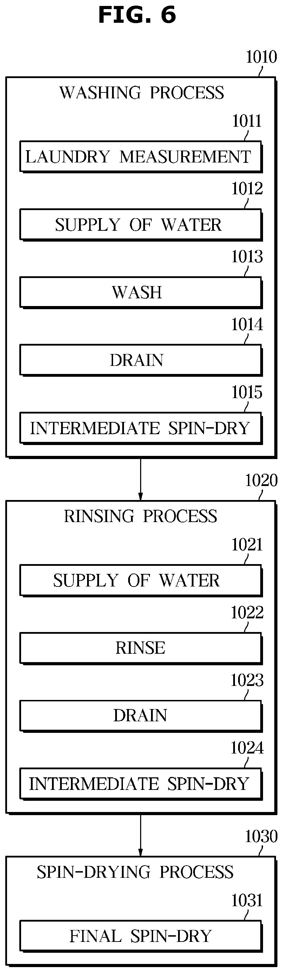

FIG. 6 illustrates an example of an operation cycle of a washing machine according to an embodiment of the disclosure.

Referring to FIG. 6, the washing machine 100 may sequentially perform a washing process 1010, a rinsing process 1020 and a spin-drying process 1030 according to a user input.

By the washing process 1010, laundry may be washed. Specifically, foreign substances attached to the laundry may be separated by a chemical action of detergent and/or a mechanical action, such as falling.

The washing process 1010 may include a laundry measurement 1011 for measuring the amount of laundry, a supply of water 1012 for supplying water to the tub 120, a wash 1013 for washing the laundry by rotating the drum 130 at low speed, a drain 1014 for discharging water accommodated in the tub 120, and an intermediate spin-dry 1015 for separating water from the laundry by rotating the drum 130 at high speed.

For the wash 1013, the controller 190 may control the drive circuitry 200 to rotate the motor 141 forward (e.g., a clockwise direction) or backward (e.g., a counterclockwise direction). By the rotation of the drum 130, the laundry falls from the upper side of the drum 130 to the lower side, so that the laundry may be washed by the falling.

For the intermediate spin-dry 1015, the controller 190 may control the drive circuitry 200 to rotate the motor 141 at high speed. By the high speed rotation of the drum 130, water may be separated from the laundry accommodated in the drum 130, and thus discharged to the outside of the washing machine 100.

During the intermediate spin-dry 1015, the rotation speed of the drum 130 may be increased gradually. For example, the controller 190 may control the drive circuitry 200 to rotate the motor 141 at a first rotation speed, and while the motor 141 rotates at the first rotation speed, the controller 190 may control the motor 141 to increase the rotation speed of the motor 141 to a second rotation speed based on a change in a drive current of the motor 141. While the motor 141 rotates at the first rotation speed, the controller 190 may control the motor 141 to increase the rotation speed of the motor 141 to a third rotation speed, or may control the motor 141 to decrease the rotation speed of the motor 141 to the first rotation speed, based on the change in the drive current of the motor 141.

By the rinsing process 1020, the laundry may be rinsed. Specifically, detergents or foreign substances left on the laundry may be washed away with water.

The rinsing process 1020 may include a supply of water 1021 for supplying water to the tub 120, a rinse 1022 for rinsing the laundry by driving the drum 130, a drain 1023 for discharging the water accommodated in the tub 120, and an intermediate spin-dry 1024 for separating water from the laundry by driving the drum 130.

The supply of water 1021, the drain 1023, and the intermediate spin-dry 1024 of the rinsing process 1020 may be the same as the supply of water 1012, the drain 1014, and the intermediate spin-dry 1015 of the washing process 1010, respectively. During the rinsing process 1020, the supply of water 1021, the rinse 1022, the drain 1023, and the intermediate spin-dry 1024 may be performed once or several times.

By the spin-drying process 1030, the laundry may be dehydrated. Specifically, water may be separated from the laundry by rotating the drum 130 at high speed, and the separated water may be discharged to the outside of the washing machine 100.

The spin-drying process 1030 may include a final spin-dry 1031 in which the drum 130 is rotated at high speed to separate water from the laundry. Due to the final spin-dry 1031, the last intermediate spin-dry 1024 of the rinsing process 1020 may be omitted.

For the final spin-dry 1031, the controller 190 may control the drive circuitry 200 to rotate the motor 141 at high speed. By the high-speed rotation of the drum 130, water may be separated from the laundry in the drum 130 and discharged to the outside of the washing machine 100. In addition, the rotation speed of the motor 141 may be increased gradually.

Because the operation of the washing machine 100 ends with the final spin-dry 1031, an operation time of the final spin-dry 1031 may be longer than that of the intermediate spin-dry 1015 or 1024.

As described above, the washing machine 100 may perform the washing process 1010, the rinsing process 1020 and the spin-drying process 1030 to wash the laundry. In particular, during the intermediate spin-dry 1015 and 1024 and the final spin-dry 1031, the washing machine 100 may gradually increase the rotation speed of the motor 141 that rotates the drum 130, and may increase or decrease the rotation speed of the motor 141 based on the change in the drive current of the motor 141.

The spin-drying process described throughout the specification may refer to all of the intermediate spin-dry 1015 performed in the washing process 1010, the intermediate spin-dry 1024 performed in the rinsing process 1020, and the final spin-dry 1031 performed in the spin-drying process 1030. Hereinafter, however, for convenience of description, it is assumed that a spin-drying process is the final spin-dry 1031 of the spin-drying process 1030 performed after the rinsing process 1020.

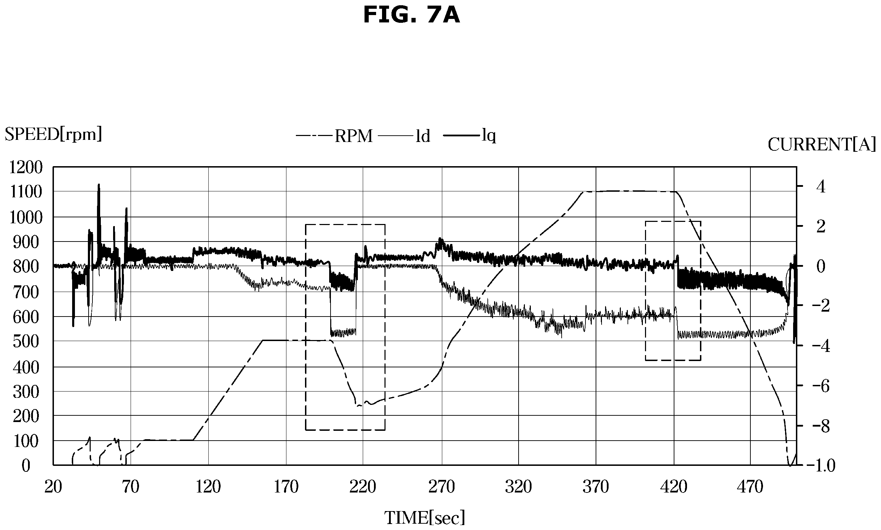

FIG. 7A illustrates a current profile of an existing washing machine according to a preset drum speed profile according to an embodiment of the disclosure.

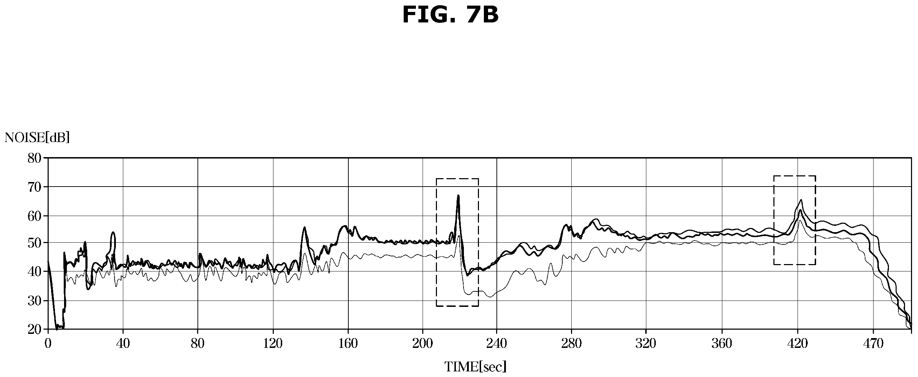

FIG. 7B illustrates a magnitude of motor noise generated in a case where an existing washing machine control method is used according to an embodiment of the disclosure.

Referring to FIG. 7A, in a spin-drying process, the drum 130 may be accelerated to a first rotation speed (e.g., approximately 500 rpm), maintained at the first rotation speed, decelerated to a second rotation speed (e.g., approximately 250 rpm), accelerated to a third rotation speed (e.g., approximately 1100 rpm), maintained at the third rotation speed, and decelerated to a fourth rotation speed (e.g., approximately 0 rpm).

That is, the controller 190 may control the drive circuitry 200 to allow the motor 141 to be accelerated to the first rotation speed, and in response to the rotation speed of the motor 141 reaching the first rotation speed, may control the drive circuitry 200 to maintain the rotation speed of the motor 141 at the first rotation speed for a preset time.

In response to the rotation speed of the motor 141 being maintained at the first rotation speed for the preset time, the controller 190 may decelerate the motor 141 from the first rotation speed to the second rotation speed (e.g., 250 rpm) (first deceleration section).

An existing washing machine decelerates a motor by performing a short brake immediately in the first deceleration section. That is, the existing washing machine decelerates the motor by opening (off) all upper switching elements included in an inverter circuit and closing (on) all lower switching elements included in the inverter circuit.

Accordingly, in the existing washing machine, a d-axis current and a q-axis current applied to the motor change rapidly when decelerating the motor, and abnormal noise may occur due to the rapid change of the d-axis current and the q-axis current applied to the motor. On the other hand, existing washing machines that do not perform a short brake take a long time to decelerate to a target speed.

Decelerating the motor 141 from the first rotation speed to the second rotation speed is to reduce imbalance of laundry, and to prevent the laundry from being biased towards one side of the drum in a case where the motor 141 is being rotated at high speed from a start of the spin-drying process.

The controller 190 may control the drive circuitry 200 to allow the motor 141 to be accelerated to the third rotation speed (e.g., 1100 rpm) in response to the motor 141 being decelerated to the second rotation speed.

In addition, the controller 190 may control the drive circuitry 200 to maintain the rotation speed of the motor 141 at the third rotation speed in response to the rotation speed of the motor 141 reaching the third rotation speed.

In response to the rotation speed of the motor 141 being maintained at the third rotation speed for a preset time, the controller 190 may end the spin-drying process by decelerating the motor 141 to the fourth rotation speed (e.g., 0 rpm; stop state) (second deceleration section).

An existing washing machine decelerates a motor by immediately performing a short brake even in the second deceleration section. Accordingly, the existing washing machine may generate abnormal noise as the first deceleration section and the second deceleration section start.

As described above, the values of the preset rotation speeds satisfy the relationship of (third rotation speed > first rotation speed > second rotation speed > fourth rotation speed).

Information about the first rotation speed, second rotation speed, third rotation speed, and fourth rotation speed may be stored in advance in the memory 192, and may be changed according to a weight of the laundry.

Referring to FIG. 7B, in an existing washing machine, in a case where a motor rotating at the first rotation speed is decelerated to the second rotation speed by the short brake method, a sum of d-axis current and q-axis current increases, causing abnormal noise from the motor. The abnormal noise generated from the motor may be unpleasant to a user and may also be unpleasant to the neighbors.

As such, in a case where the motor is decelerated by the short brake method, a large amount of current flows through the motor, causing abnormal noise. Furthermore, in a case where the motor rotating at the first rotation speed is decelerated by the short brake method, a much louder noise is generated compared to the noise generated by the motor rotating at the first rotation speed, and thus a user may perceive the noise as relatively louder.

On the other hand, because the noise generated from the motor rotating at the third rotation speed is relatively louder than the noise generated from the motor rotating at the first rotation speed, the user may perceive relatively less noise in a case where the motor rotating at the third rotation speed is decelerated by the short brake method.

That is, the noise that causes discomfort to the user occurs in the first deceleration section where the motor decelerates from the first rotation speed to the second rotation speed, rather than in the second deceleration section where the motor decelerates from the third rotation speed to the fourth rotation speed. However, abnormal noise occurs in both the first deceleration section and the second deceleration section.

In order to reduce noise generated in the first deceleration section and/or the second deceleration section and to minimize a time required for braking the motor 141, the washing machine 100 according to an embodiment may perform a soft brake for a preset time in each deceleration section.

The soft brake refers to a braking method newly defined in the disclosure.

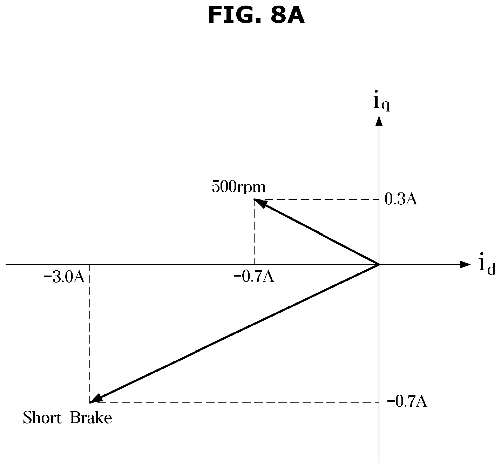

Details are described with reference to FIGS. 8A, 8B, 9, 10A, 10B, 11, and 12.

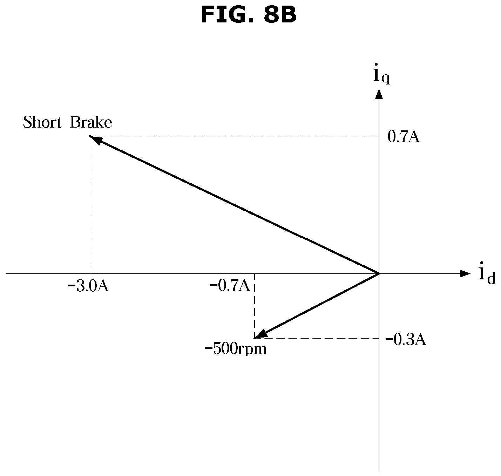

FIG. 8A illustrates an amount of change in a d-axis current and an amount of change in a q-axis current during deceleration of a motor rotating clockwise according to an embodiment of the disclosure. FIG. 8B illustrates an amount of change in a d-axis current and an amount of change in a q-axis current during deceleration of a motor rotating counterclockwise according to an embodiment of the disclosure.

Referring to FIG. 8A, in a case where the motor 141 maintains the first rotation speed in a clockwise direction before entering the first deceleration section, the d-axis current value I_{d} applied to the motor 141 corresponds to a first value (e.g., approximately -0.7A) and the q-axis current value I_{q} applied to the motor 141 corresponds to a second value (e.g., approximately 0.3 A).

That is, the controller 190 may calculate the d-axis current command value I_{d*} as the first value and the q-axis current command value I_{q*} as the second value to maintain the motor 141 at the first rotation speed.

Referring to FIG. 8A, in a case where the motor 141 enters the first deceleration section after maintaining the first rotation speed and a short brake is immediately performed on the inverter circuit, it may be confirmed by an experiment that the d-axis current value I₄ applied to the motor 141 changes to a third value (e.g., approximately -3.0A) and the q-axis current value I_{q} changes to a fourth value (e.g., approximately -0.7A).

That is, in a case where an experiment where a short brake is immediately performed in a state where the motor 141 maintains the first rotation speed is performed at least once, the third value may be determined as an average value of the d-axis current values I_{d} applied to the motor 141 in the short brake state, and the fourth value may be determined as an average value of the q-axis current values I_{q} applied to the motor 141 in the short brake state.

In this instance, information about the third value and the fourth value may be stored in the memory 192.

Referring to FIG. 8B, in a case where the motor 141 maintains the first rotation speed in a counterclockwise direction before entering the first deceleration section, the d-axis current value I_{d} applied to the motor 141 corresponds to the first value (e.g., approximately -0.7A) and the q-axis current value I_{q} applied to the motor 141 corresponds to a negative second value (e.g., approximately -0.3A).

That is, the controller 190 may calculate the d-axis current command value I_{d*} as the first value and the q-axis current command value I_{q*} as the negative second value to maintain the motor 141 at the first rotation speed.

Referring to FIG. 8B, in a case where the motor 141 enters the first deceleration section after maintaining the first rotation speed and a short brake is immediately performed on the inverter circuit 230, it may be confirmed by an experiment that the d-axis current value I_{d} applied to the motor 141 changes to the third value (e.g., approximately -3.0A) and the q-axis current value I_{q} changes to a negative fourth value (e.g., approximately 0.7A).

On the other hand, in addition to the examples described in FIGS. 8A and 8B, it may be confirmed by an experiment that even in the case where a short brake is immediately performed on the inverter circuit 230 in a state where the motor 141 rotates at a specific speed (e.g., 1100 rpm), the d-axis current value I_{d} changes to the third value (e.g., approximately -3.0A) and the q-axis current value I_{q} changes to the fourth value (e.g., approximately -0.7A) or the negative fourth value.

As described with reference to FIGS. 8A and 8B, in a case where the motor 141 maintains the first rotation speed and then enters the first deceleration section, the d-axis current value I_{d} is rapidly changed from the first value to the third value, and the q-axis current value I_{q} is rapidly changed from the second value to the fourth value. Due to such rapid changes in the d-axis current value I_{d} and the q-axis current value I_{q}, abnormal noise is generated.

According to various embodiments, in a case where the motor 141 maintains the third rotation speed in the clockwise direction and enters the second deceleration section, the d-axis current value I_{d} is rapidly changed from a value (e.g., approximately -2.0 A) greater than the first value to the third value, and the q-axis current value I_{q} is rapidly changed from a value (e.g., approximately 0.33 A) similar to the second value to the fourth value.

Meanwhile, as will be described below, the third value and the fourth value obtained by multiple experiments may be used as a target d-axis current command value and a target q-axis current command value in the soft brake method. Hereinafter, for convenience of description, the third value is defined as a preset target d-axis current command value, and the fourth value is defined as a preset target q-axis current command value.

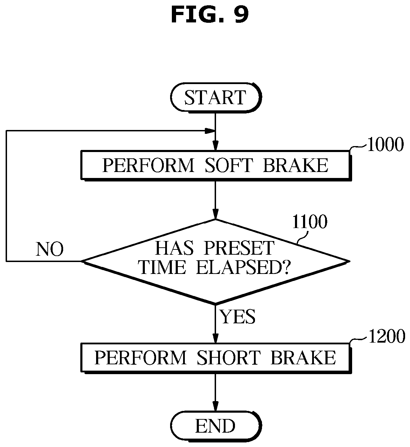

FIG. 9 is a flowchart of a method for controlling a washing machine according to an embodiment of the disclosure.

Referring to FIG. 9, the controller 190 may perform a soft brake based on a braking condition of the motor 141 being satisfied in operation 1000. More specifically, the controller 190 may control the inverter circuit 230 to perform the soft brake based on the braking condition of the motor 141 being satisfied.

As described above, the controller 190 may control the inverter circuit 230 by calculating the d-axis current command value I_{d*} and the q-axis current command value I_{q*}, and outputting a PWM control signal based on the calculated d-axis current command value I_{d*} and the calculated q-axis current command value I_{q*}.

In a case where the controller 190 controls the inverter circuit 230 to perform the soft brake for decelerating the motor 141, the controller 190 may set the d-axis current command value I_{d*} to the d-axis current value I_{d} currently applied to the motor 141, and set the q-axis current command value I_{q*} to a preset value that is unrelated to the q-axis current value I_{q} currently applied to the motor 141.

The d-axis current value I_{d} applied to the motor 141 corresponds to the d-axis current value I_{d} applied to the motor 141 immediately before performing the soft brake. For example, the d-axis current value I_{d} applied to the motor 141 rotating at the first rotation speed before entering the first deceleration section corresponds to the first value (e.g., -0.7A), and the controller 190 may initially set the first value as the d-axis current command value I_{d*}.

The preset value unrelated to the q-axis current value I_{q} applied to the motor 141 may be stored in the memory 192.

The preset value may preferably be 0. However, the preset value is not limited thereto, and any small value that is close to 0 may be employed as the preset value.

For example, in a case where the motor 141 rotates clockwise, the preset value may include 0 or a negative value slightly less than 0 (e.g., -0.1A).

Conversely, in a case where the motor 141 rotates counterclockwise, the preset value may include 0 or a positive value slightly greater than 0 (e.g., 0.1A).

The controller 190 may initially set the preset value as the q-axis current command value I_{q*}.

Meanwhile, the controller 190 may gradually change the initially set d-axis current command value to the preset target d-axis current command value while the soft brake is being performed.

That is, the controller 190 may set the d-axis current command value I_{d*} to the first value (e.g., -0.7A) based on the start of the soft brake, and may gradually change the d-axis current command value I_{d*} that is set to the first value toward the preset target d-axis current command value (-3.0A).

In addition, the controller 190 may gradually change the initially set q-axis current command value to the preset target q-axis current command value while the soft brake is being performed.

That is, the controller 190 may set the q-axis current command value I_{q*} to the preset value (e.g., 0A) based on the start of the soft brake, and gradually change the q-axis current command value I_{q*} that is set to the preset value toward the preset target q-axis current command value (-0.7A or 0.7A).

In summary, in a case where the controller 190 controls the inverter circuit 230 to perform the soft brake, the controller 190 may gradually change the d-axis current command value I_{d*} from the d-axis current value applied to the motor 141 to the preset target d-axis current value, and may gradually change the q-axis current command value I_{q*} from the preset value unrelated to the q-axis current value applied to the motor 141 to the preset target q-axis current value.

According to various embodiments, the d-axis current command value I_{d*} calculated while performing the soft brake may not exceed the preset target d-axis current value, and the q-axis current command value I_{q*} calculated while performing the soft brake may not exceed the preset target q-axis current value.

That is, the controller 190 may set limits for each of the d-axis current command value I_{d*} and the q-axis current command value I_{q*} while performing the soft brake.

A ratio at which the d-axis current command value I_{d*} gradually changes from the d-axis current value applied to the motor 141 to the preset target d-axis current value may be preset and may be changed depending on various factors.

Similarly, a ratio at which the q-axis current command value I_{q*} gradually changes from the preset value to the preset target q-axis current value may be preset and may be changed depending on various factors.

When the motor 141 is braked, the controller 190 may control the inverter circuit 230 to perform the soft brake for a preset time (e.g., approximately 0.2 seconds) in operation 1100. The controller 190 may perform a short brake in operation 1200 based on an elapse of the preset time (e.g., Yes in operation 1100). More specifically, the controller 190 may control the inverter circuit 230 to perform the short brake based on the soft brake being performed for the preset time.

In this instance, the preset time may be determined in advance and stored in the memory 192.

That is, the controller 190 may perform the short brake after performing the soft brake for the preset time when the braking condition of the motor 141 is satisfied.

According to various embodiments, in a case where the controller 190 controls the inverter circuit 230 to perform the soft brake, the controller 190 may determine a change rate of the d-axis current command value I_{d*} based on a difference between the d-axis current value (initially set d-axis current command value) applied to the motor 141 and the preset target d-axis current value and the preset time for performing the soft brake.

For example, the controller 190 may determine a value obtained by dividing the difference between the d-axis current value applied to the motor 141 and the preset target d-axis current value by the preset time as the change rate of the d-axis current command value I_{d*}. As an example, assuming that the difference between the d-axis current value (e.g., -0.7A) applied to the motor 141 and the preset target d-axis current value (e.g., -3.0A) is 2.3A and the preset time is 0.2 seconds, the controller 190 may determine the change rate of the d-axis current command value I_{d*} to be -2.3A/2s.

Thereafter, the controller 190 may gradually change the d-axis current command value I_{d*} based on the determined change rate of the d-axis current command value I_{d*}.

According to various embodiments, in a case where the controller 190 controls the inverter circuit 230 to perform the soft brake, the controller 190 may determine a change rate of the q-axis current command value I_{q*} based on a difference between the preset value and the preset target q-axis current value and the preset time.

Because the difference between the preset value and the preset target q-axis current value is also predetermined, the controller 190 may determine a value obtained by dividing the predetermined difference by the preset time as the change rate of the q-axis current command value I_{q*}. For example, assuming that the difference between the preset value (e.g., 0A) and the preset target q-axis current value (-0.7A) is 0.7A and the preset time is 0.2 seconds, the controller 190 may determine the change rate of the q-axis current command value I_{q*} to be -0.7A/2s.

Thereafter, the controller 190 may gradually change the q-axis current command value I_{q*} based on the determined change rate of the q-axis current command value I_{q*}.

According to the disclosure, the d-axis current and the q-axis current applied to the motor 141 at an end time of the soft brake are equal to the d-axis current and the q-axis current applied to the motor 141 during the short brake, and thus the noise of the motor 141 due to the rapid current change may be minimized.

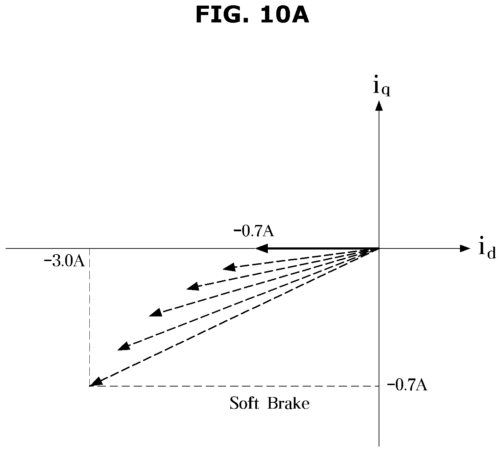

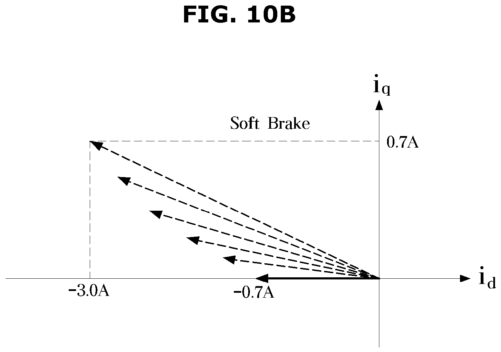

FIG. 10A illustrates a change in a d-axis current command value and a change in a q-axis current command value in a case where a soft brake is performed on a motor rotating clockwise by a washing machine according to an embodiment of the disclosure. FIG. 10B illustrates a change in a d-axis current command value and a change in a q-axis current command value in a case where a soft brake is performed on a motor rotating counterclockwise by a washing machine according to an embodiment of the disclosure.

Referring to FIG. 10A, when the motor 141 is braked, the controller 190 may set an initial d-axis current command value to a d-axis current value (e.g., -0.7A) applied to the motor 141, and may set an initial q-axis current command value to a preset value (e.g., 0A).

Thereafter, the controller 190 may gradually increase the d-axis current command value and gradually increase the q-axis current command value until a preset time elapses.

Referring to FIG. 10B, when the motor 141 is braked, the controller 190 may set the initial d-axis current command value I_{d*} to the d-axis current value (e.g., - 0.7A) applied to the motor 141, and may set the initial q-axis current command value I_{q*} to the preset value (e.g., 0A).

Thereafter, the controller 190 may gradually increase the d-axis current command value I_{d*} and gradually increase the q-axis current command value I_{q*} until a preset time elapses.

According to various embodiments, the controller 190 may terminate a soft brake and perform a short brake when the preset time elapses, regardless of whether the d-axis current command value I_{d*} reaches a preset target d-axis current value or whether the q-axis current command value I_{q*} reaches a preset q-axis current value.

According to the disclosure, the d-axis current and the q-axis current applied to the motor 141 may be gradually changed, and thus noise generated from the motor 141 may be effectively prevented.

In addition, according to the disclosure, by initially setting the q-axis current command value I_{q*} at the start of the soft brake to the preset value unrelated to the q-axis current applied to the motor 141, a deceleration efficiency of the motor 141 may be maintained.

In the disclosure, gradually changing the d-axis current command value I_{d*} to the preset target d-axis current value does not indicate that the d-axis current command value I_{d*} at an end time of the soft brake is equal to the preset target d-axis current value, but rather indicates that the d-axis current command value I_{d*} may not exceed the preset target d-axis current value while performing the soft brake.

Similarly, in the disclosure, gradually changing the q-axis current command value I_{q*} to the preset target q-axis current value does not indicate that the q-axis current command value I_{q*} at the end time of the soft brake is equal to the preset target q-axis current value, but rather indicates that the q-axis current command value I_{q*} may not exceed the preset target q-axis current value while performing the soft brake.

Meanwhile, as described above, the method of stopping the motor 141 by performing the short brake after performing the soft brake for the preset time may be used in all deceleration sections of the motor 141.

For example, the deceleration sections of the motor 141 may include a first deceleration section in which a rotation speed of the motor 141 is decelerated from a first rotation speed to a second rotation speed during a spin-drying process, and a second deceleration section in which the rotation speed of the motor 141 is decelerated from a third rotation speed greater than the first rotation speed to a fourth rotation speed less than the second rotation speed during the spin-drying process. In this instance, a first preset target d-axis current value and a first preset target q-axis current value corresponding to the first deceleration section may be equal to a second preset target d-axis current value and a second preset target q-axis current value corresponding to the second deceleration section.

However, in the first deceleration section and the second deceleration section, the d-axis current values applied to the motor 141 at a starting point of the soft brake may be different due to a difference in the rotation speed of the motor 141.

Accordingly, in the first deceleration section and the second deceleration section, there may be a difference in the d-axis current command value at the start of the soft brake and/or the preset time for performing the soft brake.

In addition, in the first deceleration section and the second deceleration section, there may be a difference in a change rate of the d-axis current command value while performing the soft brake.

Meanwhile, the controller 190 may calculate a current command vector corresponding to the d-axis current command value and the q-axis current command value. That is, the d-axis current command value and the q-axis current command value may be calculated as a vector.

In terms of the current command vector, in a case where the controller 190 controls the inverter circuit 230 to perform the soft brake, the controller 190 may gradually change a slope of the current command vector.

More specifically, in a case where the controller 190 controls the inverter circuit 230 to perform the soft brake, the controller 190 may determine the current command vector to allow the slope of the current command vector to gradually increase from 0 based on the d-axis.

The change in the slope of the current command vector may be confirmed with reference to FIGS. 10A and 10B.

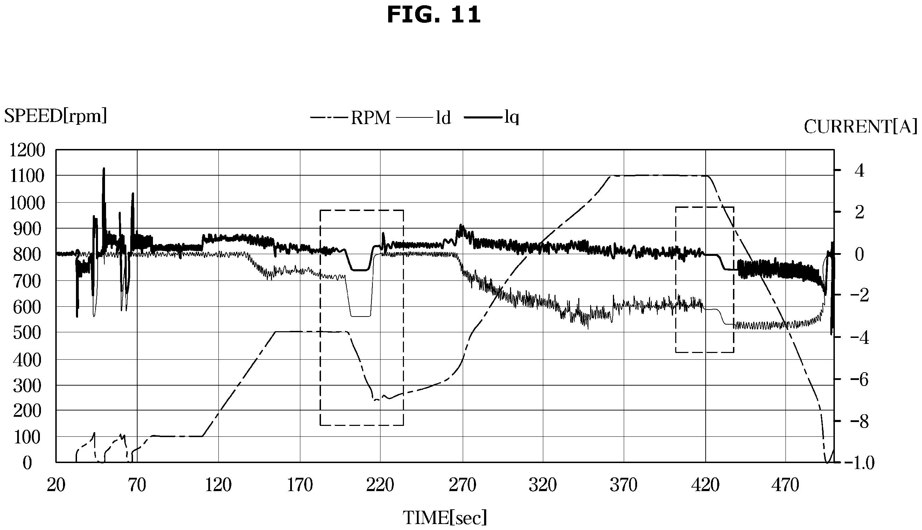

FIG. 11 illustrates a drum speed profile and a current profile of a washing machine according to an embodiment of the disclosure.

Referring to FIG. 11, it may be confirmed that the d-axis current value I_{d} applied to the motor 141 does not change rapidly in the first deceleration section and/or the second deceleration section, but changes gradually. In addition, it may be confirmed that the q-axis current value I_{q} applied to the motor 141 does not change rapidly in the first deceleration section and/or the second deceleration section, but changes gradually.

According to the disclosure, by setting a target value of d-axis current and a target value of q-axis current in advance and gradually changing the d-axis current and the q-axis current toward the preset target value of the d-axis current and the preset target value of the q-axis current, the d-axis current and the q-axis current applied to the motor may be gradually changed.

Meanwhile, even though the d-axis current command value reaches the preset target d-axis current value and the q-axis current command value reaches the preset target q-axis command value, all the upper switching elements may not be opened and all the lower switching elements may not be closed.

Accordingly, when performing the soft brake, the controller 190 may control the inverter circuit 230 based on the d-axis current command value and the q-axis current command value, whereas when performing the short brake, the controller 190 may control a plurality of switching elements included in the inverter circuit 230 regardless of the d-axis current command value and the q-axis current command value.

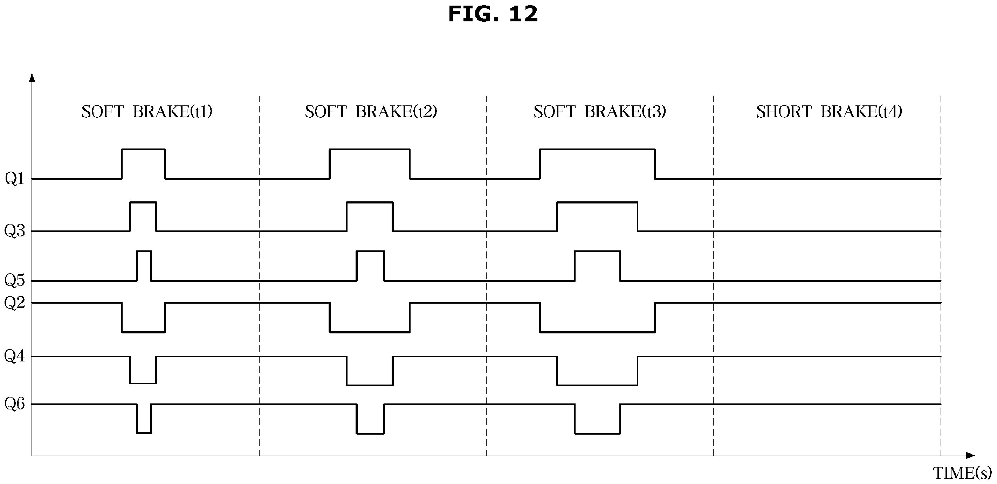

FIG. 12 illustrates an example of a control signal for an inverter circuit of a washing machine according to an embodiment of the disclosure.

Referring to FIG. 12, the controller 190 may control the inverter circuit 230 based on the d-axis current command value I_{d*} and the q-axis current command value I_{q*} while a soft brake is being performed t1, t2, and t3.

As the d-axis current command value I_{d*} and the q-axis current command value I_{q*} gradually increase at the t1, t2, and t3, a closing time (on-time) of upper switching elements Q1, Q3, and Q5 may gradually increase, and an opening time (off-time) of lower switching elements Q2, Q4, and Q5 may gradually decrease correspondingly.

Meanwhile, at a starting point t4 of a short brake, all of the lower switching elements Q2, Q4, and Q5 may be closed (on) and all of the upper switching elements Q1, Q3, and Q5 may be opened (off), regardless of the d-axis current command value I_{d*} and the q-axis current command value I_{q*}.

According to the disclosure, the noise generated by the motor may be reduced while maintaining deceleration of the motor, thereby satisfying a user's needs.

Meanwhile, according to the disclosure, motor noise prevention efficiency and deceleration efficiency may be maximized in that initial setting values and limit setting values of a d-axis current command value and a q-axis current command value are set, as opposed to a technique of simply gradually increasing or decreasing a current applied to a motor.

Meanwhile, the disclosed embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium.

The computer-readable recording medium may include all kinds of recording media storing instructions that may be interpreted by a computer. For example, the computer-readable recording medium may be a Read Only Memory (ROM), a Random Access Memory (RAM), a magnetic tape, a magnetic disk, a flash memory, an optical data storage device, etc.

In addition, the computer-readable storage medium may be provided in the form of a non-transitory storage medium. Here, when a storage medium is referred to as "non-transitory", it may be understood that the storage medium is tangible and does not include a signal (e.g., an electromagnetic wave), but rather that data is semi-permanently or temporarily stored in the storage medium. For example, a "non-transitory storage medium" may include a buffer in which data is temporarily stored.

According to an embodiment, the method according to the various embodiments disclosed herein may be provided in a computer program product. The computer program product may be traded between a seller and a buyer as a product. The computer program product may be distributed in the form of a machine-readable storage medium (e.g., compact disc read only memory (CD-ROM)), or may be distributed (e.g., download or upload) through an application store (e.g., Play Store^{™}) online or directly between two user devices (e.g., smartphones). In the case of online distribution, at least a portion of the computer program product (e.g., downloadable app) may be stored at least semi-permanently or may be temporarily generated in a storage medium, such as memory of a server of a manufacturer, a server of an application store, or a relay server.

While the disclosure has been shown and described with reference to various embodiments thereof, it will be understood by those skilled in the art that various changes in form and details may be made therein without departing from the spirit and scope of the disclosure, as defined by the appended claims and their equivalents.

## Claims

1. A washing machine, comprising:
a drum;
a motor configured to rotate the drum;
an inverter circuit configured to drive the motor; and
a controller configured to:
control the inverter circuit based on a d-axis current command value and a q-axis current command value and
control the inverter circuit to perform a soft brake for a preset time and control the inverter circuit to perform a short brake based on an elapse of the preset time for decelerating the motor,
wherein, while controlling the inverter circuit to perform the soft brake, the controller is configured to:
gradually change the d-axis current command value from a d-axis current value applied to the motor to a preset target d-axis current value, and gradually change the q-axis current command value from a preset value that is unrelated to a q-axis current value applied to the motor to a preset target q-axis current value.

2. The washing machine of claim 1,
wherein the preset target d-axis current value has a negative value, and
wherein the preset target q-axis current value has a negative value or a positive value depending on a rotation direction of the motor.

3. The washing machine of claim **1,** wherein the preset value is 0.

4. The washing machine of claim **1,** wherein, while controlling the inverter circuit to perform the short brake, the controller is configured to open upper switching elements included in the inverter circuit and close lower switching elements included in the inverter circuit.

5. The washing machine of claim 1,
wherein a deceleration section of the motor includes:
a first deceleration section that decelerates a rotation speed of the motor from a first rotation speed to a second rotation speed during a spin-drying process, and
a second deceleration section that decelerates the rotation speed of the motor from a third rotation speed greater than the first rotation speed to a fourth rotation speed less than the second rotation speed during the spin-drying process, and
wherein a first preset target d-axis current value and a first preset target q-axis current value corresponding to the first deceleration section are equal to a second preset target d-axis current value and a second preset target q-axis current value corresponding to the second deceleration section.

6. The washing machine of claim 1, wherein, while controlling the inverter circuit to perform the soft brake, the controller is configured to determine a change rate of the d-axis current command value based on a difference between the d-axis current value applied to the motor and the preset target d-axis current value and the preset time, and change the d-axis current command value based on the change rate of the d-axis current command value.

7. The washing machine of claim 1, wherein the controller is configured to determine a change rate of the q-axis current command value based on a difference between the preset value and the preset target q-axis current value and the preset time, and change the q-axis current command value based on the change rate of the q-axis current command value.

8. The washing machine of claim 1, wherein, in a case where the inverter circuit is controlled to perform the soft brake, the controller is configured to control the inverter circuit based on the d-axis current command value and the q-axis current command value, and
in a case where the inverter circuit is controlled to perform the short brake, the controller is configured to control a plurality of switching elements included in the inverter circuit regardless of the d-axis current command value and the q-axis current command value.

9. The washing machine of claim 1, wherein the controller is configured to calculate a current command vector corresponding to the d-axis current command value and the q-axis current command value, and
gradually change a slope of the current command vector in a case where the inverter circuit is controlled to perform the soft brake.

10. The washing machine of claim 9, wherein the controller is configured to determine the current command vector to allow a magnitude of the slope of the current command vector to gradually increase from 0 based on a d-axis.

11. A method for controlling a washing machine, the method comprising:
performing a soft brake for a preset time for decelerating a motor; and
performing a short brake based on an elapse of the preset time for the decelerating of the motor,
wherein the performing of the soft brake comprises:
gradually changing a d-axis current command value from a d-axis current value applied to the motor to a preset target d-axis current value; and
gradually changing a q-axis current command value from a preset value that is unrelated to a q-axis current value applied to the motor to a preset target q-axis current value.

12. The method of claim 11,
wherein the preset target d-axis current value has a negative value, and
wherein the preset target q-axis current value has a negative value or a positive value depending on a rotation direction of the motor.

13. The method of claim 11, wherein the preset value is 0.

14. The method of claim 11, wherein the performing of the short brake comprises:
opening upper switching elements included in an inverter circuit configured to drive the motor; and
closing lower switching elements included in the inverter circuit.

15. The method of claim 11, wherein a deceleration section of the motor includes a first deceleration section that decelerates a rotation speed of the motor from a first rotation speed to a second rotation speed during a spin-drying process, and a second deceleration section that decelerates the rotation speed of the motor from a third rotation speed greater than the first rotation speed to a fourth rotation speed less than the second rotation speed during the spin-drying process, and
wherein a first preset target d-axis current value and a first preset target q-axis current value corresponding to the first deceleration section are equal to a second preset target d-axis current value and a second preset target q-axis current value corresponding to the second deceleration section.
